# EUROPÄISCHE PATENTSCHRIFT

(11) **EP 0 523 399 B1**
(45) Veröffentlichungstag und Bekanntmachung des Hinweises auf die Patenterteilung: **07.02.1996**
(21) Anmeldenummer: 92110468.3
(22) Anmeldetag: 22.06.1992
(51) Int. Cl.: C01G 49/00, C09C 1/22

(54) **Temperaturstabiles Schwarzpigment, Verfahren zu seiner Herstellung sowie dessen Verwendung**
Thermally stable black pigment, process for its preparation and its use
Pigment noir thermiquement stable, procédé pour sa préparation et son utilisation

(30) Priorität: 02.07.1991 DE 4121789
(43) Veröffentlichungstag der Anmeldung: 20.01.1993
(73) Patentinhaber: BAYER AG, D-51368 Leverkusen (DE)
(72) Erfinder: Kuske, Peter, Dr., W-4150 Krefeld 1 (DE); Buxbaum, Gunter, Dr., W-4150 Krefeld 1 (DE)

(56) Entgegenhaltungen:
- EP-A- 0 176 919
- EP-A- 0 372 335
- DE-A- 2 159 364
- DATABASE WPIL Derwent Publications Ltd., London, GB; AN 92-214199
- DATABASE WPIL Derwent Publications Ltd., London, GB; AN 88-117465

## Beschreibung

Die vorliegende Erfindung betrifft ein temperaturstabiles Schwarzpigment, bestehend aus einem Mischoxid des Mangans und des Eisens mit der Kristallstruktur des Hämatits, ein Verfahren zur Herstellung des Pigmentes sowie dessen Verwendung.

Schwarze Pigmente auf der Basis von Fe₃O₄ haben sich für viele Anwendungsbereiche bewährt. Aufgrund der geringen Hitzebeständigkeit sind sie jedoch für Anwendungen in autoklaviergehärteten Baustoffen oder für temperaturbeständige Lacke nicht geeignet, da sie hierbei zu braunem oder rotem Fe₂O₃ oxydiert werden.

Handelsübliche Schwarzpigmente des Systems Fe₂O₃-Mn₂O₃, wie sie in der DE-B 17 67 868 beschrieben sind, zeigen eine gute Temperaturbeständigkeit und sind für die genannten Anwendungsbereiche gut geeignet. Diese Pigmente weisen jedoch gegenüber handelsüblichen Pigmenten auf der Basis von Fe₃O₄ nur Farbstärken von 40-70 % auf, mit dem Nachteil, daß z.B. Baustoffe zur Erzielung eines tiefschwarzen Farbeindrucks mit größeren Mengen der genannten Pigmente versetzt werden müssen.

Die DE-B 17 67 868 beschreibt ein Verfahren zur Herstellung eines temperaturstabilen Schwarzpigmentes des Systems Fe₂O₃-Mn₂O₃, bestehend aus Phasen mit den Strukturen des Hämatits und dem Hauptbestandteil des Bixbyits. Nach dem Verfahren werden oxidische oder oxidbildende Ausgangsstoffe des Eisens und des Mangans vermischt, mit Mineralisatoren wie Kochsalz versetzt und bei Temperaturen von 800 bis 900°C verglüht. Nach dem beschriebenen Verfahren sind keine gegenüber dem Pigment Bayferrox® 303T deutlich farbstärkeren Pigmente zu erhalten. Das Pigment Bayferrox® 303T ist ein handelsübliches temperaturstabiles Schwarzpigment des Systems Fe₂O₃-Mn₂O₃ der Bayer AG.

Die DE-A 2 159 364 beschreibt ein Verfahren zur Herstellung temperaturstabiler Schwarzpigmente mit der Struktur des Hämatits. Nach dem Verfahren wird β-FeOOH mit Mangan enthaltenden Verbindungen verglüht. Aufgrund des im β-FeOOH strukturell enthaltenen Chlorids wird bei der Glühung mit Braunstein in nicht unerheblichen Mengen Chlorgas freigesetzt, was für eine technische Realisierung des Verfahrens nachteilig ist. Die nach dem Verfahren erhaltenen Pigmente sind sehr farbstark, zeigen jedoch einen unerwünschten Farbstich mit einem gelbroten Farbunterton. Diese Pigmente sind daher zur Erzielung eines tiefschwarzen Farbeindruckes, wie z.B. zur Herstellung von schieferfarbenen Baustoffen oder für tiefschwarze Coilcoats (Blechlackierungen) nicht geeignet.

Nach der DE-A 26 20 953 werden temperaturstabile Schwarzpigmente durch Kalzination von Gemischen, bestehend aus Eisensulfat und Mangan-enthaltenden Verbindungen hergestellt. Aufgrund des bei den Verfahren entstehenden SO₂ ist eine aufwendige Rauchgasentschwefelung durchzuführen, Schwarze Pigmente werden bei Mangangehalten von 11,5-46 % entsprechend einem Eisen:Mangan-Verhältnis von 5 bis 0,5 zu 1 und bevorzugt zwischen 14 und 23 % Mangan erhalten, Das Verfahren folgt somit der Lehre der DE-B 17 67 868, wonach die Phase mit der Struktur des Bixbyits Träger der Pigmenteigenschaften ist, Bei Mangangehalten von weniger als 11,5 %, entsprechend einem Eisen:Mangan-Verhältnis von > 5:1 werden braune Pigmente erhalten.

Nach dem Verfahren der US-A 3 655 418 werden die Hydroxide des Eisens und des Mangans aus Lösungen in Gegenwart von Flockungsmitteln ausgefällt und anschließend verglüht. Aufgrund der Beschaffenheit der Niederschläge sind diese schwer filtrierbar und schlecht auszuwaschen, Die hierdurch bedingten Salzgehalte im Filterkuchen verursachen bei der Glühung eine starke Versinterung, so daß schwer aufzumahlende Ofenklinker erhalten werden. Die Pigmente sind farbschwach und zeigen einen deutlichen Braunstich, Weiterhin ist durch die Zersetzung der Salze bei der Glühung eine aufwendige Reinigung der Ofenabgase durchzuführen.

Nach dem Verfahren der DE-C 191 063 werden braune oder schwarze Eisenoxide mit Hämatitstruktur durch Kalzination von Vorprodukten erhalten, die nach dem Anilinverfahren hergestellt werden. Die nach dem Verfahren her gestellten Schwarzpigmente zeichnen sich durch einen deutlichen Rotstich und einge geringe Farbstärke aus. Die Farbstärke in Bezug zu Bayferrox® 303T beträgt lediglich 40-50 %.

Aufgabe dieser Erfindung ist daher, ein farbstarkes temperaturstabiles Schwarzpigment zur Verfügung zu stellen, welches die beschriebenen Nachteile nicht aufweist.

Überraschenderweise wurde nun gefunden, daß tiefschwarze Pigmente des Systems Fe₂O₃-Mn₂O₃ durch Verglühen von Fällprodukten, bestehend aus einer Phase mit der Struktur des Spinells der Mischkristallreihe Fe₃O₄-Mn₃O₄, hergestellt werden können. Nach dem Verfahren werden bereits bei Mangangehalten von 3 Gew.-% schwarze und bei etwa 5 - 10 Gew.-% Mn tiefschwarze Pigmente erhalten.

Die nach dem Verfahren hergestellten Pigmente der Mischkristallreihe Fe₂O₃-Mn₂O₃ bestehen im wesentlichen aus einer Phase mit der Struktur des Hämatits und enthalten zwischen 3 und 18 % Mangan. Der Anteil der Hämatitphase beträgt mindestens 60 Gew.-%, bevorzugt mehr als 80 Gew.-%.

Gegenstand der vorliegenden Erfindung ist somit ein temperaturstabiles Schwarzpigment, bestehend aus einem Mischoxid des Mangans und des Eisens mit der Struktur des Hämatits, welches dadurch gekennzeichnet ist, daß es einen Mangangehalt von 3 bis 18 Gew.-%, bevorzugt 6 bis 18 Gew.-%, aufweist und daß es bei der farbmetrischen Prüfung in Lacksystemen in der Aufhellung mit Titandioxid (10 Gew.-Teile Titandioxid Bayertitan R-KB-2 und 1 Gew.-Teil Schwarzpigment) absolute Farbwerte in CIELAB-Einheiten für L* von 60 bis 70, für a* Werte von 0 bis 1,9 und bevorzugt 0 bis 1,2, sowie für b* Werte von -4 bis -6,5 und bevorzugt -5,0 bis -6,0 zeigt.

Die vorliegende Erfindung wiederlegt das Vorurteil aus der DE-B 17 67 868, wonach bei Schwarzpigmenten des Systems Fe₂O₃-Mn₂O₃ die Phase mit der Struktur des Bixbyits Träger der Eigenschaften des Schwarzpigmentes ist und die Hämatitphase einen unerwünschten rotstichigen Farbunterton und eine relativ geringe Farbstärke zeigen soll.

Bevorzugt weist das erfindungsgemäße Schwarzpigment einen SiO₂-Gehalt von (1 Gew.-%, besonders bevorzugt von (0,3 Gew.-%, auf. Es unterscheidet sich hiermit von Pigmenten, die durch Verglühen mit mineralischem Braunstein erhalten werden.

Die Farbstärke der erfindungsgemäßen Schwarzpigmente wird besonders durch ihren Mangan-Gehalt bestimmt.

Besonders farbstarke Pigmente werden bei einem Eisen: Manganverhältnis von 10:1 bis 4:1, entsprechend einem Manganverhältnis von 6-14 Gew.-% erhalten. In diesem Bereich werden die Pigmente bei zunehmendem Mangangehalt farbstärker und weniger rot- und gelbstichig. Bei einem Eisen:Mangan-Verhältnis von weniger als etwa 4:1 wird in den verglühten Vorprodukten zusätzlich eine Phase mit der Struktur des Bixbyits gefunden. Pigmente mit einem Eisen:Mangan-Verhältnis von weniger als 4:1 zeigen daher keine zunehmende Farbstärke mit steigendem Mangangehalt.

Von Einfluß auf die Koloristik der Schwarzpigmente ist auch deren Gehalt an zusätzlichen Elementen. Besonders gute koloristische Werte zeigen erfindungsgemäße Pigmente, die ein oder mehrere der Elemente Aluminium, Chrom, Titan, Mangnesium, Calcium und Zink in einer Gesamtmenge bis zu 5 Gew.-% in Form der Oxide enthalten.

Gegenstand dieser Erfindung ist auch ein Verfahren zur Herstellung der erfindungsgemäßen Schwarzpigmente. Dieser ist dadurch gekennzeichnet, daß zunächst ein aus Mn- und Fe-Oxiden bzw. -Hydroxiden bestehendes Vorprodukt, welches die Phase der Struktur des Spinells aufweist, hergestellt wird und daß dieses Vorprodukt anschließend bei Temperaturen von 500-1000°C, bevorzugt 600-800°C, in oxidierender Atmosphäre verglüht wird.

Besonders geeignet sind dabei solche Vorprodukte, die im wesentlichen aus einer Phase mit der Struktur des Spinells der ungefähren Zusammensetzung Fe₃-ₓMnₓO₄ mit 0 < x < 3 bestehen.

Bevorzugt werden die Vorprodukte nach einem Fällverfahren durch Oxidation von Salzen des Eisens und des Mangans in Gegenwart vn Alkalien hergestellt.

Ein Verfahren zu deren Herstellung ist z.B. aus der US-A 3 822 210 bekannt.

Zur Herstellung der erfindungsgemäßen Pigmente sind insbesondere Vorprodukte mit spezifischen Oberflächen von 2 bis 20 m²/g, besonders bevorzugt 4 bis 10 m²/g, bestimmt nach der Stickstoff-Adsorptionsmethode (DIN 66 131), geeignet. Bei der Verglühung von feinteiligeren Vorprodukten werden Pigmente erhalten, die einen unerwünschten rot- oder gelbstichigen Farbunterton zeigen, bei Verglühung von sehr grobteiligen Vorprodukten zeigen die Pigmente geringe Farbstärken. Besonders sind daher Vorprodukte mit spezifischen Oberflächen von 4-10 m²/g geeignet, da hierbei sehr farbstarke Pigmente erhalten werden, die keinen unerwünschten Farbunterton zeigen.

Die gefällten Vorprodukte werden bei Temperaturen von 500 bis 1000°C, bevorzugt 600 bis 800°C, bei typischen Verweilzeiten von 15 bis 180 min verglüht. Verweilzeiten von etwa 5 min bei 800°C sind bereits ausreichend, um eine vollständige Umsetzung zu einer Phase mit Hämatitstruktur zu erreichen. Bevorzugt werden die Glühungen bei Temperaturen von 650 bis 750°C bei Verweilzeiten von 1 bis 180 min, bevorzugt von 30 bis 120 min, durchgeführt, da bei diesen Bedingungen keine deutliche Versinterung eintritt und somit keine aufwendige Mahlung notwendig ist. Zur Verglühung kann feuchter Filterkuchen oder getrocknetes Vorprodukt eingesetzt werden. Der Salzgehalt des Vorproduktes beträgt weniger als 1 %, vorzugsweise weniger als 0,5 %. Mit steigendem Salzgehalt wird bei der Glühung eine deutliche Versinterung bobachtet. Farbstarke Pigmente sind dann nur nach einer aufwendigen Mahlung zu erhalten.

Die Glühungen erfolgen in Sauerstoff enthaltender Atmosphäre mit direkter oder indirekter Befeuerung bei typischen Sauerstoffgehalten von 10 bis 20 Vol.-%.

In einer allgemeinen Ausführung werden Salze des zweiwertigen Eisens und des Mangans in molaren Verhältnissen von 20:1 bis 2:1 mit alkalischen Fällungsmitteln gefällt, wobei die Menge des verwendeten Fällmittels mindestens der doppelten molaren Menge der eingesetzten Metallsalze beträgt. Die alkalische Fällung wird bei Temperaturen von 60°C bis zum Siedepunkt in einem Rührkessel für 3 - 8 Stunden mit Luft begast. Die erhaltene Suspension wird auf Nutschen filtriert und auf Salzgehalte von weniger als 1 Gew.-% gewaschen. Der gewaschene Filterkuchen wird in feuchter Form oder nach dem Trocknen verglüht.

Die Glühung erfolgt im Muffelofen oder in einer Drehbirne bei Temperaturen von 500 - 900°C in oxidierender Atmosphäre. Die Verweilzeiten können wenige Minuten bis einige Stunden betragen.

Nach der bei der Pigmentherstellung üblichen Mahlung, z.B. in Stift-, Kugelschwing- oder Strahlmühlen werden Prüfungen im Bindemittel F 48 oder L 64 entsprechend DIN 6174/ ISO 7724, 1-3 drafts zur Ermittlung der Farbstärke und des Farbstichs durchgeführt und die CIELAB (C/2 grd.)-Werte in den Beispielen mitgeteilt. Als Bezug wird das Schwarzpigment Bayferrox® 303T (Handelsprodukt der Bayer AG) verwendet.

Gegenstand dieser Erfindung ist auch die Verwendung des erfindungsgemäßen schwarzen Pigmentes zur Einfärbung von Baustoffen sowie zur Pigmentierung in temperaturbeständigen Lacksystemen.

Im folgenden soll die Erfindung anhand von Beispielen erläutert werden, ohne sie jedoch hierdurch einzuschränken.

### Vergleichsbeispiel 1

Das Beispiel 4 der DE-A 02 159 364 wurde nachgearbeitet. Das gewaschene, getrocknete Vorprodukt besteht nach diffraktometrischer Untersuchung im wesentlichen aus β-FeOOH. Das verglühte Pigment enthält neben einer Hämatitphase zusätzlich weitere Phasen. Das Pigment wurde im Dismembrator®, 3 min Stahlkugel gemahlen. Das Pigment zeigt eine Farbstärke von 350 % bei da* = 0,9 und db* 4,7. Das Pigment zeigt einen deutlichen braunen Farbunterton und ist für tiefschwarze Einfärbungen nicht geeignet.

### Vergleichsbeispiel 2

Das Beispiel 3 der DE-A 02 159 364 wurde nachgearbeitet. Das Pigment besteht im wesentlichen aus einer Phase mit Hämatitstruktur und ist von braunschwarzer Farbe. Die Farbstärke beträgt 355 % bei da* = 4,9 und db* = 12.

### Vergleichsbeispiel 3

Das Beispiel 1 der DE-A 26 20953 wurde nachgearbeitet. Das Pigment wurde 3 Stunden bei 850°C kalziniert und im Dismembrator®, 3 min Stahlkugel, gemahlen., Das Pigment zeigt im Vergleich zum Bezug Bayferrox® 303T eine Farbstärke von 105 % bei da* = 0,1 und db* = -0,1.

Nach diffraktometrischer Untersuchung enthält das Pigment Phasen mit den Strukturen des Bixbyits und des Hämatits.

### Vergleichsbeispiel 4

Das Beispiel 4 der DE-A 1 191 063 wurde nachgearbeitet. Durch Glühen bei Temperaturen von 600-800°C wurde ein Pigment erhalten, das von braunschwarzer Farbe ist. Dieses Pigment ist für tiefschwarze Einfärbungen nicht geeignet. Nach diffraktometrischer Untersuchung enthält das Pigment Phasen mit den Strukturen des Bixbyits und des Hämatits.

### Beispiel 1

In einem mit einem Begasungsrührer versehenen 30 l Rührkessel wurden 10,1 l FeSO₄-Lösung mit 200 g FeSO₄/l und 0,9 l MnSO₄-Lösung mit 600 g/l MnSO₄xH₂O, vereinigt und mit Stickstoff begast. Dann wurde in 15 min mit 2,3 l Natronlauge einer Konzentration von 656 g/l NaOH versetzt und unter Rühren auf 85°C aufgeheizt. Bei 85°C wurde für 5,5 Stunden mit 300 l/h Luft begast. Die schwarze Suspension wurde auf Nutschen mit etwa 20 l Wasser gewaschen und im Umlufttrockenschrank bei 80°C getrocknet. Nach Analyse enthält das getrocknete Vorprodukt 0,2 % lösliche Salze. Die spezifische Oberfläche des Vorprodukts beträgt 5,3 m²/g. Nach diffraktometrischer Untersuchung besteht das Vorprodukt aus einer Phase mit der Struktur des Spinells.

300 g des Vorproduktes wurden für 4 Stunden bei 700°C unter Zufuhr von 500 l Luft/h in einer Drehbirne verglüht. Nach Analyse enthält das Pigment 12,5 % Mn. Das Röntgenbeugungsdiagramm des Pigmentes zeigt ausschließlich die Beugungslinien des Hämatits. Das Pigment wurde in einer Kugelschwingmühle Typ Dismembrator® verschiedenen Mahlungen unterworfen
a) 1 min Achatkugel
b) 3 min Stahlkugel
c) Dampfstrahlmahlung
Die farbmetrische Prüfung in L 64, F 48 und in Spat ergab Farbstärken von 200-260 %. Das Pigment ist tiefschwarz und zeigt keinen unerwünschten Farbstich.

### Mahlung Prüfung in Farbstärke da* db*

1 min Achat L 64 201 -0,2 -0,3
3 min Stahl L 64 260 0 0,1
Dampfstrahl L 64 260 0,2 0,1
Dampfstrahl F 48 252 0,4 0
Dampfstrahl Spat 214 0,2 -0,9

### Beispiel 2

Es wurde entsprechend zum Beispiel 1 vorgegangen, mit der Ausnahme, daß zur Herstellung des Vorproduktes 11,85 l FeSO₄ mit 200 g/l, 0,28 l MnSO₄-Lösung mit 600 g/l MnSO₄xH₂O und 2,32 l Natronlauge mit 656 g/l verwendet wurden` Die spezifische Oberfläche des Vorprodukts beträgt 3,8 m²/g. Der Salzgehalt beträgt 0,3 Gew.-%. Nach Analyse besteht das Vorprodukt aus einer Phase mit Spinellstruktur. Das Vorprodukt wurde getrocknet und für 4 Stunden bei 700°C in der Drehbirne bei Zufuhr von 500 l Luft/h geglüht. Nach der Mahlung im Dismembrator® (1 min, Achatkugel) beträgt die Farbstärke 164 % bei da* = 1,4 und db* = 0,4.

Nach Analyse enthält das Pigment 3,9 Gew.-% Mn und besteht ausschließlich aus einer Phase mit Hämatitstruktur.

### Beispiel 3

Es wurde entsprechend zum Beispiel 1 vorgegangen, mit der Ausnahme, daß zur Herstellung des Vorproduktes 11,39 l FeSO₄ mit 200 g/l und 0,47 l MnSO₄ mit 600 g/l MnSO₄xH₂O sowie 2,32 l NaOH mit 656 g/l verwendet wurden. Nach Analyse besteht das Vorprodukt aus einer Phase mit Spinellstruktur. Die spezifische Oberfläche beträgt 3,6 m²/g.

Das Vorprodukt wurde für 4 Stunden bei 700°C geglüht und anschließend in einer Dampfstrahlmühle bei einem Verhältnis von Dampf:Produkt von 3:1 gemahlen. Nach farbmetrischer Auswertung in L 64 beträgt die Farbstärke im Bezug zu 303T 208 % bei da* = 0,6 und db* = 0,6. Nach Analyse enthält das Pigment 6,4 % Mn und besteht aus einer Phase mit Hämatitstruktur.

### Beispiel 4

Zur Herstellung des Vorproduktes wurde entsprechend zum Beispiel 1 vorgegangen, mit der Ausnahme, daß 10,1 l FeSO₄ mit 200 g/l und 0,94 l MnSO₄ mit 600 g/l MnSO₄ und 2,32 l NaOH mit 656 g/l verwendet wurden.

Die spezifische Oberfläche des Vorproduktes beträgt 5,2 m²/g. Nach Analyse besteht das Vorprodukt aus einer Phase mit Spinellstrukur.

Das Vorprodukt wurde für 4 Stunden bei 550°C geglüht und im Dismembrator® für 1 min mit einer Achatkugel gemahlen. Die Farbstärke in L 64 beträgt 222 % bei da* = -0,1 und db* = 0. Der Mangangehalt beträgt 13,8 %. Nach Phasenanalyse besteht das Pigment aus einer Phase mit Hämatit- Struktur.

### Beispiel 5

Das Vorprodukt des Beispiels 4 wurde verschiedene Zeiten bei 700°C in einer vorgeheizten Porzellanschale im Muffelofen geglüht und anschließend im Dismembrator® gemahlen (1 min Achatkugel)

| Glühdauer | Farbstärke | da* | db* |
|---|---|---|---|
| 10 min | 197 | -0,5 | 0,4 |
| 30 min | 192 | -0,6 | 0,5 |
| 60 min | 188 | -0,7 | 0,6 |
| 2 min | 225 | 0,9 | 1,3 |
| 4 min | 224 | 0 | 0,1 |

### Beispiel 6

Es wurde entsprechend zum Beispiel 1 vorgegangen, mit der Ausnahme, daß die Zugabe der Natronlauge so dosiert wurde, daß während der Reaktion ein konstanter pH-Wert von 10,5 eingestellt wurde.
Die spezifische Oberfläche des Vorproduktes beträgt 10 m²/g. Das Vorprodukt wurde für zwei Stunden bei 700°C geglüht und im Dismembrator® für 3 min mit einer Stahlkugel gemahlen. Die Farbstärke in L 64 beträgt 330 % bei da* = 1,3 und db* = 1,7.

**Tabelle 1**

| Absolute Farbwerte zu den Beispielen 1 - 6 und den Vergleichsbeispielen 1 - 3. Aufhellung in L 64: 10 Gew.-Tle Bayertitan R-KB-2, 1 Gew.-Tl Schwarzpigment | | | | |
|---|---|---|---|---|
| Beispiel | L* | a* | b* | C* |
| 1a | 64,6 | 0,7 | -6,1 | 6,1 |
| 1b | 64,3 | 0,8 | -5,8 | 5,9 |
| 1c | 64,4 | 0,8 | -5,9 | 5,9 |
| 2 | 69,5 | 1,9 | -5,1 | 5,4 |
| 3 | 66,7 | 1,2 | -5,2 | 5,3 |
| 4 | 66,6 | 0,5 | -6,0 | 6,0 |
| 5a | 64,6 | 0,7 | -5,7 | 5,7 |
| b | 65,1 | 0,5 | -5,8 | 5,8 |
| c | 64,7 | 0,5 | -6,0 | 6,0 |
| d | 66,1 | 1,5 | -4,5 | 4,7 |
| e | 66,1 | 0,6 | -5,7 | 5,7 |
| 6 | 61,3 | 2,0 | -4,1 | 4,6 |

| Vergleichsbeispiel | L* | a* | b* | c* |
|---|---|---|---|---|
| 1 | 61,5 | 1,6 | -1,6 | 2,3 |
| 2 | 61,4 | 5,6 | -5,8 | 8,1 |
| 3 | 73,3 | 0,5 | -5,0 | 5,0 |
| 5 | 67,1 | -0,2 | -5,9 | 5,9 |
| 303T | 73,9 | 0,4 | -5,0 | 5,0 |

### Vergleichsbeispiel 5

Es wurde entsprechend zum Beispiel 1 vorgegangen, mit der Ausnahme, daß 10,84 l FeSO₄ mit 200 g/l, 1,99 l MnSO₄ mit 600 g/l MnSO₄ x H₂O sowie 5,25 l NaOH mit 350 g/l verwendet wurden.

Nach Analyse besteht das Vorprodukt aus einer Phase mit Spinellstruktur. Die spezifische Oberfläche beträgt 6,4 m²/g. Das Vorprodukt wurde für 4 Stunden bei 750°C geglüht und im Dismembrator®(1 min, Achathugel) gemahlen. Die Farbstärke beträgt 208 % bei da* = -0,6, db* = 0,1 und dc* = -0,1. Das Pigment enthält 23 % Mn.

Nach phasenanalytischer Untersuchung enthält das Pigment Phasen mit den Strukturen des Hämatits und des Bixbyids. Der Anteil der Hämatitphase beträgt etwa 85%.

## Patentansprüche (Patentansprüche für folgende(n) Vertragsstaat(en): AT, BE, DE, FR, GB, IT, NL, SE)

1. Temperaturstabiles Schwarzpigment, bestehend aus einem Mischoxid des Mangans und des Eisens mit der Struktur des Hämatits, dadurch gekennzeichnet, daß es einen Mangangehalt von 3 bis 18 Gew.-%, bevorzugt 6 bis 18 Gew.-%, aufweist und daß es bei der farbmetrischen Prüfung in Lacksystemen in der Aufhellung mit Titandioxid im Verhältnis 10:1 absolute Farbwerte in CIELAB-Einheiten für L* von 60 bis 70, für a* Werte von 0 bis 1,9 und bevorzugt 0 bis 1,2, sowie für b* Werte von -4 bis -6,5 und bevorzugt -5,0 bis -6,0 zeigt.

2. Schwarzpigment gemäß Anspruch 1, dadurch gekennzeichnet, daß es einen SiO₂-Gehalt von <1 Gew.-% aufweist.

3. Schwarzpigment gemäß einem der Ansprüche 1 oder 2, dadurch gekennzeichnet, daß es zusätzlich ein oder mehrere der Elemente Aluminium, Chrom, Titan, Magnesium, Calcium und Zink in einer Gesamtmenge bis zu 5 Gew.-% in Form der Oxide enthält.

4. Schwarzpigment gemäß einem oder mehreren der Ansprüche 1 bis 3, dadurch gekennzeichnet, daß der Gehalt an Si, berechnet als SiO₂, weniger als 0,3 Gew.-% beträgt.

5. Verfahren zur Herstellung der Schwarzpigmente gemäß einem oder mehreren der Ansprüche 1 bis 4, dadurch gekennzeichnet, daß zunächst ein aus Mn- und Fe-Oxiden bzw. -Hydroxiden bestehendes Vorprodukt, welches die Phase der Struktur des Spinells aufweist, hergestellt wird und daß dieses Vorprodukt anschließend bei Temperaturen von 500-1000°C, bevorzugt 600-800°C, in oxidierender Atmosphäre verglüht wird.

6. Verfahren gemäß Anspruch 5, dadurch gekennzeichnet, daß das Vorprodukt nach einem Fällverfahren durch Oxidation von Salzen des Eisens und des Mangans in Gegenwart von Alkalien hergestellt wird.

7. Verfahren gemäß einem der Ansprüche 5 oder 6, dadurch gekennzeichnet, daß das Vorprodukt spezifische Oberflächen, bestimmt nach der Stickstoff-Adsorptionsmethode, von 2 bis 20 m²/g bevorzugt 4 bis 10 m²/g, aufweist.

8. Verfahren gemäß einem oder mehreren der Ansprüche 5 bis 7, dadurch gekennzeichnet, daß das Vorprodukt nach einer Waschung auf Salzgehalte von weniger als 1 Gew.-%, bevorzugt weniger als 0,5 Gew.-%, als feuchter Filterkuchen oder in getrockneter Form in den Ofen eingetragen wird.

9. Verfahren gemäß einem oder mehreren der Ansprüche 5 bis 8, dadurch gekennzeichnet, daß die Verweilzeit im Ofen zwischen 1 und 180 min, bevorzugt 30 bis 120 min, beträgt.

10. Verwendung des Schwarzpigments gemäß einem oder mehreren der Ansprüche 1 bis 9 zur Einfärbung von autoklaviergehärteten Baustoffen und zur Pigmentierung in temperaturbeständigen Lacksystemen.

## Patentansprüche (Patentansprüche für folgende(n) Vertragsstaat(en): ES)

1. Verfahren zur Herstellung eines temperaturstabilen Schwarzpigmentes, bestehend aus einem Mischoxid des Mangans und des Eisens mit der Struktur des Hämatits, welches einen Mangangehalt von 3 bis 18 Gew.-%, bevorzugt 6 bis 18 Gew.-%, aufweist und bei der farbmetrischen Prüfung in Lacksystemen in der Aufhellung mit Titandioxid im Verhältnis 10:1 absolute Farbwerte in CIELAB-Einheiten für L* von 60 bis 70, für a* Werte von 0 bis 1,9 und bevorzugt 0 bis 1,2, sowie für b* Werte von -4 bis -6,5 und bevorzugt -5,0 bis -6,0 zeigt, dadurch gekennzeichnet, daß zunächst ein aus Mn-und Fe-Oxiden bzw. -Hydroxiden bestehendes Vorprodukt, welches die Phase der Struktur des Spinells aufweist, hergestellt wird und daß dieses Vorprodukt anschließend bei Temperaturen von 500-1000°C, bevorzugt 600-800°C, in oxidierender Atmosphäre verglüht wird.

2. Verfahren gemäß Anspruch 1, dadurch gekennzeichnet, daß das Vorprodukt nach einem Fällverfahren durch Oxidation von Salzen des Eisens und des Mangans in Gegenwart von Alkalien hergestellt wird.

3. Verfahren gemäß einem der Ansprüche 1 oder 2, dadurch gekennzeichnet, daß das Vorprodukt spezifische Oberflächen, bestimmt nach der Stickstoff-Adsorptionsmethode, von 2 bis 20 m²/g, bevorzugt 4 bis 10 m²/g, aufweist.

4. Verfahren gemäß einem oder mehreren der Ansprüche 1 bis 3, dadurch gekennzeichnet, daß das Vorprodukt nach einer Waschung auf Salzgehalte von weniger als 1 Gew.-%, bevorzugt weniger als 0,5 Gew.-%, als feuchter Filterkuchen oder in getrockneter Form in den Ofen eingetragen wird.

5. Verfahren gemäß einem oder mehreren der Ansprüche 1 bis 4, dadurch gekennzeichnet, daß die Verweilzeit im Ofen zwischen 1 und 180 min, bevorzugt 30 bis 120 min, beträgt.

6. Verfahren gemäß einem oder mehreren der Ansprüche 1 bis 5, dadurch gekennzeichnet, daß es einem SiO₂-Gehalt von (1 Gew.-% aufweist.

7. Verfahren gemäß einem oder mehreren der Ansprüche 1 bis 6, dadurch gekennzeichnet, daß es zusätzlich ein oder mehrere der Elemente Aluminium, Chrom, Titan, Magnesium, Calcium und Zink in einer Gesamtmenge bis zu 5 Gew.-% in Form oder Oxide enthält.

8. Verfahren gemäß einem oder mehreren der Ansprüche 1 bis 7, dadurch gekennzeichnet, daß der Gehalt an Si, berechnet als SiO₂, weniger als 0,3 Gew.-% beträgt.

## Claims (Claims for the following Contracting State(s): AT, BE, DE, FR, GB, IT, NL, SE)

1. A temperature-resistant black pigment consisting of a mixed oxide of manganese and iron with the structure of hematite, characterized in that it has a manganese content of 3 to 18% by weight and preferably 6 to 18% by weight and that, in colorimetric testing in paint systems, it shows absolute colour values, expressed in CIELAB units, when lightened with titanium dioxide in a ratio of 10:1 of 60 to 70 for L*, 0 to 1.9 and preferably 0 to 1.2 for a* and -4 to -6.5 and preferably -5.0 to -6.0 for b*.

2. A black pigment as claimed in claim 1, characterized in that it has an SiO₂ content of <1% by weight.

3. A black pigment as claimed in claim 1 or 2, characterized in that it additionally contains one or more of the elements aluminium, chromium, titanium, magnesium, calcium and zinc in a total quantity of up to 5% by weight in the form of the oxides.

4. A black pigment as claimed in one or more of claims 1 to 3, characterized in that the Si content, expressed as SiO₂, is less than 0.3% by weight.

5. A process for the production of the black pigment claimed in one or more of claims 1 to 4, characterized in that a precursor consisting of Mn and Fe oxides or hydroxides, which contains the phase with the structure of spinel, is initially prepared and is subsequently calcined in an oxidizing atmosphere at temperatures in the range from 500 to 1,000°C and preferably at temperatures in the range from 600 to 800°C.

6. A process as claimed in claim 5, characterized in that the precursor is prepared by a precipitation process in which salts of iron and manganese are oxidized in the presence of alkalis.

7. A process as claimed in claim 5 or 6, characterized in that the precursor has specific surfaces, as determined by the nitrogen adsorption method, of 2 to 20 m²/g and preferably 4 to 10 m²/g.

8. A process as claimed in one or more of claims 5 to 7, characterized in that, after washing to salt contents of less than 1% by weight and preferably less than 0.5% by weight, the precursor is introduced into the furnace in the form of a moist filter cake or in dried form.

9. A process as claimed in one or more of claims 5 to 8, characterized in that the residence time in the furnace is between 1 and 180 minutes and preferably between 30 and 120 minutes.

10. The use of the black pigment claimed in one or more of claims 1 to 9 for colouring autoclave-cured building materials and for pigmenting in heat-resistant paint systems.

## Claims (Claims for the following Contracting State(s): ES)

1. A process for the production of a temperature-resistant black pigment which consists of a mixed oxide of manganese and iron with the structure of hematite, has a manganese content of 3 to 18% by weight and preferably 6 to 18% by weight and, in colorimetric testing in paint systems, shows absolute colour values, expressed in CIELAB units, when lightened with titanium dioxide in a ratio of 10:1 of 60 to 70 for L*, 0 to 1.9 and preferably 0 to 1.2 for a* and -4 to -6.5 and preferably -5.0 to -6.0 for b*, characterized in that a precursor consisting of Mn and Fe oxides or hydroxides, which contains the phase with the structure of spinel, is initially prepared and is subsequently calcined in an oxidizing atmosphere at temperatures in the range from 500 to 1,000°C and preferably at temperatures in the range from 600 to 800°C.

2. A process as claimed in claim 1, characterized in that the precursor is prepared by a precipitation process in which salts of iron and manganese are oxidized in the presence of alkalis.

3. A process as claimed in claim 1 or 2, characterized in that the precursor has specific surfaces, as determined by the nitrogen adsorption method, of 2 to 20 m²/g and preferably 4 to 10 m²/g.

4. A process as claimed in one or more of claims 1 to 3, characterized in that, after washing to salt contents of less than 1% by weight and preferably less than 0.5% by weight, the precursor is introduced into the furnace in the form of a moist filter cake or in dried form.

5. A process as claimed in one or more of claims 1 to 4, characterized in that the residence time in the furnace is between 1 and 180 minutes and preferably between 30 and 120 minutes.

6. A process as claimed in one or more of claims 1 to 5, characterized in that it has an SiO₂ content of <1% by weight.

7. A process as claimed in one or more of claims 1 to 6, characterized in that it additionally contains one or more of the elements aluminium, chromium, titanium, magnesium, calcium and zinc in a total quantity of up to 5% by weight in the form of the oxides.

8. A process as claimed in one or more of claims 1 to 7, characterized in that the Si content, expressed as SiO₂, is less than 0.3% by weight.

## Revendications (Revendications pour l'(les) Etat(s) contractant(s) suivant(s): AT, BE, DE, FR, GB, IT, NL, SE)

1. Pigment noir thermiquement stable, composé d'un oxyde mixte du manganèse et du fer ayant la structure de l'hématite, caractérisé en ce qu'il possède une concentration en manganèse de 3 à 18 % en poids, de préférence de 6 à 18 % en poids et en ce que, lors du test colorimétrique dans des systèmes de peintures, il présente dans l'éclaircissage au moyen d'oxyde de titane, dans un rapport de 10:1, des valeurs chromatiques absolues en unités CIELAB pour L* de 60 à 70, pour a*, des valeurs de 0 à 1,9 et de préférence de 0 à 1,2, ainsi que pour b*, des valeurs de -4 à -6,5 et de préférence -5,0 à -6,0.

2. Pigment noir selon la revendication 1, caractérisé en ce qu'il présente une concentration en SiO₂ < 1 % en poids.

3. Pigment noir selon l'une quelconque des revendications 1 ou 2, caractérisé en ce qu'il contient, sous forme d'oxydes, un ou plusieurs des éléments aluminium, chrome, titane, magnésium, calcium et zinc dans une quantité totale allant jusqu'à 5 % en poids.

4. Pigment noir selon une ou plusieurs des revendications 1 à 3, caractérisé en ce que la concentration en Si, évaluée sous la forme de SiO₂, est inférieure à 0,3 % en poids.

5. Procédé pour la préparation des pigments noirs selon une ou plusieurs des revendications 1 à 4, caractérisé en ce qu'un préproduit, composé d'oxydes ou d'hydroxydes de manganèse et de fer et présentant la phase de la structure du spinelle, est d'abord préparé et en ce que ce préproduit est ensuite calciné sous atmosphère oxydante à des températures de 500-1000° C, de préférence 600-800° C.

6. Procédé selon la revendication 5, caractérisé en ce que le préproduit est préparé selon un procédé de précipitation par oxydation de sels du fer et du manganèse en présence d'alcalis.

7. Procédé selon l'une quelconque des revendications 5 ou 6, caractérisé en ce que le préproduit présente des superficies spécifiques de 2 à 20 m²/g, de préférence de 4 à 10 m²/g, déterminées selon la méthode d'adsorption de l'azote.

8. Procédé selon une ou plusieurs des revendications 5 à 7, caractérisé en ce que le préproduit est introduit dans le four, sous la forme d'un gâteau de filtre humide ou sous forme sèche, après un lavage opéré jusqu'à ce que des teneurs en sels inférieures à 1 % en poids, de préférence inférieures à 0,5 % en poids soient obtenues.

9. Procédé selon une ou plusieurs des revendications 5 à 8, caractérisé en ce que le temps de séjour dans le four varie entre 1 et 180 min, de préférence 30 à 120 min.

10. Utilisation du pigment noir selon une ou plusieurs des revendications 1 à 9 pour l'encrage d'éléments trempés à l'autoclave et pour la pigmentation dans des systèmes de peintures thermiquement constants.

## Revendications (Revendications pour l'(les) Etat(s) contractant(s) suivant(s): ES)

1. Procédé pour la prépération d'un pigment noir thermiquement stable, composé d'un mixte du manganèse et du fer ayant la structure de l'hématite, qui possède une concentration en manganèse de 3 à 18 % en poids, de préférence de 6 à 18 % en poids et en ce que, lors du test colorimétrique dans des systèmes de peintures, il présente dans l'éclaircissage au moyen d'oxyde de titane, dans un rapport 10:1, des valeurs chromatiques absolues en unités CIELAB pour L* de 60 à 70, pour a*, des valeurs de 0 à 1,9 et de préférence de 0 à 1,2, ainsi que pour b*, des valeurs de -4 à -6,5 et de préférence -5,0 à - 6,0, caractérisé en ce qu'un préproduit, composé d'oxydes ou d'hydroxydes de manganèse et de fer et présentant la phase de la structure du spinelle, est d'abord préparé et en ce que ce préproduit est ensuite calciné sous atmosphère oxydante à des températures de 500-1000° C, de préférence 600-800° C.

2. Procédé selon la revendication 1, caractérisé en ce que le préproduit est préparé selon un procédé de précipitation par oxydation de sels du fer et du manganèse en présence d'alcalis.

3. Procédé selon l'une quelconque des revendications 1 ou 2, caractérisé en ce que le préproduit présente des superficies spécifiques de 2 à 20 m²/g, de préférence de 4 à 10 m²/g, déterminées selon la méthode d'adsorption de l'azote.

4. Procédé selon une ou plusieurs des revendications 1 à 3, caractérisé en ce que le préproduit est introduit dans le four, sous la forme d'un gâteau de filtre humide ou sous forme sèche, après un lavage effectué jusqu'à ce que des teneurs en sel inférieures à 1 % en poids, de préférence inférieures à 0,5 % en poids, soient atteintes.

5. Procédé selon une ou plusieurs des revendications 1 à 4, caractérisé en ce que le temps de séjour dans le four varie entre 1 et 180 min, de préférence 30 à 120 min.

6. Procédé selon une ou plusieurs des revendications 1 à 5, caractérisé en ce qu'il présente une concentration en SiO₂ < 1 % en poids.

7. Procédé selon une ou plusieurs revendications 1 à 6, caractérisé en ce qu'il contient, sous forme d'oxydes, un ou plusieurs des éléments aluminium, chrome, titane, magnésium, calcium et zinc dans une quantité totale allant jusqu'à 5 % en poids.

8. Procédé selon une ou plusieurs des revendications 1 à 7, caractérisé en ce que la concentration en Si, évaluée sous la forme de SiO₂, est inférieure à 0,3 % en poids.
